# EUROPÄISCHE PATENTSCHRIFT

(11) **EP 3 109 559 B1**
(45) Veröffentlichungstag und Bekanntmachung des Hinweises auf die Patenterteilung: **05.08.2020**
(21) Anmeldenummer: 16001406.4
(22) Anmeldetag: 23.06.2016
(51) Int. Cl.: F24D 3/16, F24F 5/00, E05D 15/58, E05F 15/40, E05F 15/42, E05F 15/47

(54) **VERFAHREN UND SYSTEM SOWIE ZWISCHENPRODUKT ZUR EINRICHTUNG EINER GEBÄUDERAUMKLIMATISIERUNG**
METHOD AND SYSTEM AND INTERMEDIATE PRODUCT FOR ESTABLISHING A BUILDING SPACE AIR CONDITIONING
PROCEDE ET SYSTEME ET PRODUIT INTERMEDIAIRE DESTINE A CREER UNE CLIMATISATION DE BATIMENT

(30) Priorität: 25.06.2015 DE 102015008062
(43) Veröffentlichungstag der Anmeldung: 28.12.2016
(73) Patentinhaber: Schmöle GmbH, 58730 Fröndenberg (DE)
(72) Erfinder: Bitter, Dieter, 57413 Finnentrop (DE); Bitter, Kristina, 44139 Dortmund (DE)
(74) Vertreter: Roche, von Westernhagen & Ehresmann

(56) Entgegenhaltungen:
- EP-A1- 0 769 659
- CH-A1- 707 238

## Beschreibung

Die vorliegende Erfindung betrifft zunächst ein Verfahren zur Einrichtung einer Gebäuderaumklimatisierung.

Hierzu ist es im Stand der Technik grundsätzlich bekannt, Haltekassetten oder sogenannte "Segel" an einer Decke oder Wand eines Gebäuderaumes anzuordnen. Die dem Rauminneren zugewandte Seite der Haltekassette weist hierbei eine ansprechende Optik auf, welche die eigentlichen Wärmetauscheinrichtungen, wie beispielsweise ein fluidführendes Rohrsystem, verblendet oder kaschiert.

Aus dem Stand der Technik ist es ferner bereits bekannt, Flächenwärmetauscher des Haltekassettentyps herstellerseitig fertigzustellen: In diesem Sinne stellt der Hersteller zunächst eine Haltekassette bereit, in dessen Innenseite er ein Rohrsystem einlegt und dieses typischerweise unmittelbar an der Innenseite oder (mittelbar an der Innenseite über ein Vlies) dort befestigt. Zur Befestigung des Rohrsystems können übliche Halterungsmittel oder insbesondere sogenannte (streifenartige) "Wärmeleitbleche" genutzt werden.

Der fertiggestellte Flächenwärmetauscher wird bei diesem Verfahren des Standes der Technik dann insgesamt, im fertiggestellten Zustand, an einen entfernten Ort geliefert, wo der Gebäuderaum befindlich ist, in welchem der Flächenwärmetauscher zu montieren ist.

Dieses Verfahren des Standes der Technik hat sich insofern als nachteilig erwiesen, als hinsichtlich der Wärmeleitfähigkeit des gesamten Wärmetauschers noch Verbesserungsbedarf besteht und andererseits (insbesondere herstellerseitig) ein sehr großer Logistikaufwand anfällt.

Ein solches Verfahren des Standes der Technik ist beispielsweise aus der EP 0 769 659 A1 bekannt, gemäß welcher ein das Rohrsystem tragende, streifenförmige Kontaktelement ein Wärmeleitblech ausbildet, welches an einem einzigen Ort, unmittelbar, mit Hilfe eines Klebebandes in einer Haltekassette direkt verklebt wird.

Aufgabe der vorliegenden Erfindung ist es daher, ein Verfahren bereitzustellen, welches bei verbesserter Wärmeleitfähigkeit einen verminderten Logistikaufwand ermöglicht.

Die vorliegende Erfindung löst diese Aufgabe zunächst mit den Merkmalen des Patentanspruches 1 und demnach insbesondere durch die folgenden Verfahrensschritte:
- Bereitstellen einer Haltekassette zur Decken-oder Wandmontage mit einer sich im wesentlichen in einer Ebene erstreckenden Befestigungsfläche an einem ersten Ort, insbesondere dem Montageort,
- Fertigstellen eines Zwischenproduktes, umfassend genau eine mindestens 0,3mm dicke Metall-Trägerplatte an dessen einer Seite ein Rohrsystem zum Leiten eines Mediums von mindestens einem Wärmeleitblech festgelegt ist und an dessen anderer Seite eine Klebeschicht sowie eine die Klebeschicht abdeckende Schutzschicht angeordnet sind, an einem zweiten, entfernten Ort,
- Verbringen des Zwischenproduktes von dem zweiten an den ersten Ort,
- manuelles Entfernen, insbesondere Abziehen, der Schutzschicht zur Freilegung der Klebeschicht,
- manuelles Verkleben des Zwischenproduktes an der Befestigungsfläche der Haltekassette mit Hilfe der freigelegten Klebeschicht zur Fertigstellung eines Flächenwärmetauschers,
- Montage des fertiggestellten Flächenwärmetauschers an der Gebäuderaumdecke oder -wand, insbesondere als Teil einer Vielzahl von kaskadenartig angeordneten und leitungstechnisch verbundenen Flächenwärmetauschern an besagter Gebäuderaumdecke oder -wand.

Mit anderen Worten besteht die Idee der Erfindung darin, das Rohrsystem nicht an einem ersten Ort unmittelbar an der Haltekassette zu befestigen, sondern das Rohrsystem vielmehr zunächst an einer mindestens 0,3 mm dicken Trägerplatte zu befestigen, wobei diese Trägerplatte an der gegenüberliegenden Seite eine geschützte Klebeschicht aufweist.

In einem separaten Arbeitsschritt kann diese handhabbare Einheit, welche auch als Zwischenprodukt bezeichenbar ist, dann an einem separaten, entfernten Ort mit der Haltekassette verklebt werden.

Auf diese Weise wird zunächst eine optimierte Wärmeleitung gesichert, da zwischen der relativ dünnen Haltekassette und dem Rohrsystem eine Trägerplatte angeordnet ist, welche vermag, die zu übertragende Temperatur oder Wärmeenergie optimiert auf die Haltekassette zu übertragen (womit auch die Klimatisierung des Raumes durch den fertiggestellten Flächenwärmetauscher optimiert wird).

Zudem reduziert sich der logistische Aufwand insofern, als dass der Hersteller des Zwischenproduktes lediglich noch das Zwischenprodukt herstellen muss und somit ein besser transportables Produkt zur Verfügung stellt, welches ohne Haltekassette transportierbar ist. Da die Klebeschicht geschützt ist, kann das Zwischenprodukt, welches von den Abmaßungen her deutlich platzsparender zu lagern und zu transportieren ist, gehandhabt bzw. angefasst werden, ohne dass unerwünschte Klebungen auftreten.

Bei dem ersten Ort kann es sich beispielsweise um den Fertigstellungsort des Zwischenproduktes, insbesondere eine Montagehalle des Zwischenproduktherstellers oder Ähnliches, handeln.

Das Zwischenprodukt kann dann an einen anderen, zweiten Ort transportiert werden, bei dem es sich insbesondere um den Montageort handeln kann, also um den Ort, an dem sich der zu klimatisierende Gebäuderaum befindet. Unter dem Begriff "Ort" kann hierbei eine Lokalität verstanden werden, beispielsweise eine Stadt oder auch ein Gebäude oder auch eine Umgebung. An dem Montageort kann die Haltekassette bereits befindlich sein. Die Fertigstellung des Flächenwärmetauschers sowie die Montage des Flächenwärmetauschers kann dann direkt und unmittelbar am Montageort erfolgen, beispielsweise durch einen am Montageort ansässigen Handwerker oder ein spezialisiertes Unternehmen.

Alternativ kann es sich bei dem zweiten Ort, an welchen das Zwischenprodukt verbracht wird, auch nicht um den Montageort handeln. Beispielsweise kann es sich vielmehr um den Ort des Sitzes des Monteurs handeln. Dieser kann das Zwischenprodukt erhalten, das in seinen eigenen Betriebsstätten mit den dort vorhandenen oder dorthin geschafften Haltekassetten zu vollständigen Flächenwärmetauschern verbunden wird. Diese fertiggestellten Flächenwärmetauscher kann er dann zum Montageort transportieren und anschließend dort die Montage vornehmen.

Entscheidend ist, dass eine räumliche Trennung von dem Ort der Fertigstellung des Zwischenproduktes und dem Ort der Fertigstellung des Flächenwärmetauschers (durch Einbringen des Zwischenproduktes in einer Haltekassette) erfolgt.

Der erste und der zweite Ort können hierfür beispielsweise mindestens einen Kilometer, vorzugsweise mindestens 10 Kilometer oder weiter vorzugsweise mindestens 50 Kilometer voneinander entfernt sein. In diesem Sinne sind die beiden Orte mehrere Kilometer voneinander entfernt.

Hierfür ist es notwendig, dass das Zwischenprodukt handhabbar und transportabel ist und insbesondere die vorgesehene Klebeschicht geschützt ist.

Zum Schutz dieser Klebeschicht ist eine Schutzschicht vorgesehen, welche beispielsweise als Folie oder Ähnliches ausgebildet ist. Insbesondere kann es sich bei der Klebeschicht auch um ein industriell übliches Klebeband handeln, welches bereits mit einer entsprechenden, abziehbaren Schutzfolie versehen ist. In diesem Sinne braucht die Klebeschicht nicht durchgängig ausgebildet zu sein. Vielmehr kann auch eine Vielzahl von Klebestreifen oder Ähnliches vorgesehen sein.

Entscheidend ist, dass die klebenden Bereiche der Klebeschicht mit einer abziehbaren Schutzschicht versehen sind, welche manuell entfernbar ist.

So kann am zweiten Ort (insbesondere an dem Montageort) zur Fertigstellung des Flächenwärmetauschers die besagte Schutzschicht manuell, also werkzeuglos, entfernt werden. Hierzu kann die Schutzschicht beispielsweise spezielle Mittel vorsehen oder auch auf herkömmliche Art einfach greifbar und abziehbar ausgebildet sein. Bei der Schutzschicht kann es sich beispielsweise um ein Papier oder um eine Folie oder Ähnliches handeln, welche geeignet ist, die Klebeschicht zu schützen, welche von dieser aber allein wieder leicht und manuell ablösbar ist.

Durch das Abziehen oder Entfernen der Schutzschicht wird die Klebeschicht freigelegt und der Rest des Zwischenproduktes (also das Zwischenprodukt ohne die Schutzschicht) kann dann mit der Haltekassette verklebt werden. Hierzu weist die Haltekassette typischerweise in ihrem Inneren eine Befestigungsfläche auf, welche eben ausgestaltet ist.

Typischerweise wird dabei in einer Haltekassette genau ein Flächenwärmetauscher angebracht. Bei alternativen Ausführungen ist es aber auch möglich, zwei oder mehr Flächenwärmetauscher in eine Haltekassette einzubringen, wobei die Flächenwärmetauscher in diesem Fall vorzugsweise untereinander strömungstechnisch verbunden werden.

Der Haltekassette können Haltemittel zur Befestigung an einer Wand oder an einer Decke eines Gebäuderaumes auf herkömmliche Weise zugeordnet sein. Zudem kann eine Kassette, je nach Kundenanforderung und Einsatz, auch sogenannte Akustiklochungen aufweisen. Die Kassette ist in diesem Sinne nicht geschlossen ausgebildet, sondern weist auf ihrer Oberfläche, also insbesondere im Bereich der Befestigungsfläche, Lochungen auf, welche typischerweise regelmäßig und rasterförmig angeordnet sind. In diesem Fall ist es sinnvoll, dass das in die Haltekassette einzubringende Zwischenprodukt ebenfalls kongruente Lochungen aufweist, jedenfalls im Bereich der Trägerplatte und gegebenenfalls der Klebeschicht. Insbesondere die Schutzschicht braucht diese Lochungen nicht aufzuweisen, da sie vor der Fertigstellung des Flächenwärmetauschers abgezogen oder entfernt wird.

Ein derartig hergestellter Flächenwärmetauscher wird üblicherweise mit einer Mehrzahl identischer Flächenwärmetauscher gemeinsam an einer Decke oder einer Wand eines Gebäudes, möglichst fugenlos, verbaut, um eine homogene Optik zu bieten. Die Rohrsysteme der einzelnen Flächenwärmetauscher können hierbei strömungstechnisch verbunden werden, insbesondere auch durch Öffnungen in den Seitenwänden der Haltekassette oder Ähnliches.

Eine derartige Vielzahl von Flächenwärmetauschern kann auch als Klimadecke oder Klimawand bezeichnet werden. Sie dient dabei der Klimatisierung des Raumes, also insbesondere der Erwärmung oder Kühlung des Raumes.

Im Falle einer gewünschten Wärmewirkung wird durch das Rohrsystem typischerweise ein heisses Medium, insbesondere Wasser, geleitet. Im Falle einer gewünschten Kühlung ein kaltes Medium, ebenfalls bevorzugterweise gekühltes Wasser. Die Rohre bestehen dabei insbesondere aus Kupfer, können aber auch aus jedem anderen geeigneten Metall oder sonstigem Material, wie beispielsweise einem geeignetem Kunststoff, bestehen. Typischerweise weisen die Rohre eines einzelnen Flächenwärmetauschers dabei eine Mäanderform auf, bestehen also aus abschnittsweise geraden und gebogenen Abschnitten. Vorteilhafterweise weisen die geraden Abschnitte dabei im Querschnitt eine D-Form auf und die runden Abschnitte im Querschnitt eine kreisrunde Form.

An der Trägerplatte ist das Rohrsystem typischerweise mit Hilfe von Wärmeleitblechen befestigt, welche an der Trägerplatte entweder verklebt oder auf andere, insbesondere mechanische, Art und Weise befestigt werden (z.B. formschlüssig). Insbesondere können mehrere streifenartige Wärmeleitbleche vorgesehen sein, welche weiter insbesondere den geraden Rohrabschnitten zugeordnet sind und diese beidseitig oder zumindest einseitig befestigt übergreifen.

Zur Montage des Flächenwärmetauschers kann, wie bereits beschrieben, die Schutzschicht von dem Zwischenprodukt entfernt werden und dieses kann dann manuell, insbesondere unter Druckbeaufschlagung, auf der Befestigungsfläche der Haltekassette vollflächig bzw. satt verklebt werden.

Die Haltekassette besteht typischerweise aus Metall oder Stahl und kann insbesondere auch magnetisch ausgebildet sein. Sie ist auch als Segel bezeichenbar und der sie verwendende Wärmetauscher wird auch als Wärmetauscher des Kassettentyps bezeichnet. Das oder die Wärmeleitbleche bestehen in der Regel aus gut wärmeleitenden Materialien, so dass insbesondere eine Wärmeleitfunktion gegeben ist, um die Temperatur des Mediums auf die Trägerplatte zu übertragen. Neben dieser Wärmeleitfunktion weist das Wärmeleitblech selbstverständlich auch die Funktion auf, das Rohrsystem (bzw. einen Rohrsystemabschnitt) zu fixieren und gleichzeitig unter stetiger Spannung an die Trägerplatte zu drücken. Daher wird das Wärmeleitblech typischerweise aus federndhartem Metall gefertigt.

Aufgrund der mindestens 3 mm starken Metall-Trägerplatte (gegebenenfalls auch Stahl verwendbar) kann die Temperatur noch optimierter übertragen werden. Vorzugsweise weist die Metallträgerplatte eine Dicke von mindestens 0,5 mm auf und weiter vorzugsweise von mindestens 0,6 mm. Zu dünne Bleche, wie sie beispielsweise aus dem gattungsfremden Bereich der Kühlschranktechnologie bekannt sind, sind nicht verwendbar, da sie einerseits leicht knicken und andererseits keinen anständigen Wärmeübertrag ermöglichen, was bei Flächenwärmetauschern aus dem Bereich der Gebäudeklimatisierung aber besonders wichtig ist.

Bei dem vorliegend eingesetzten und zusammengebauten Flächenwärmetauscher ist die Trägerplatte samt Rohrsystem und Wärmeleitblech der dem Raum abgewandten Innenseite der Kassette zugeordnet.

Bezüglich des erfindungsgemäßen Verfahrens gemäß Anspruch 1 sei angemerkt, dass die dort angeführten letzten vier Verfahrensschritte insbesondere in chronologischer Reihenfolge ihrer Nennung durchgeführt werden.

Gemäß einer besonders vorteilhaften Ausgestaltung des erfindungsgemäßen Verfahrens besteht die Trägerplatte aus Aluminium, was eine besonders gute Wärmeleitfähigkeit ermöglicht.

Gemäß einer weiteren vorteilhaften Ausgestaltung des erfindungsgemäßen Verfahrens ist die äußere Schutzschicht, welche die Klebeschicht abdeckt, folien- oder blattartig ausgebildet und manuell, werkzeuglos, abziehbar. Es kann sich bei der Schutzschicht also um eine Folie handeln oder auch um ein Papier oder Ähnliches, welches geeignet ist, manuell von der Klebeschicht wieder abziehbar zu sein.

Insbesondere kann die Schutzschicht als Teil eines Klebebandes ausgebildet sein oder einer klebebandartigen Schicht, welche bereits gemeinsam mit der Klebeschicht beschaffbar ist. Herstellerseitig kann beispielsweise ein Klebeband oder eine Klebeschicht mit beidseitiger Schutzschicht beschafft werden. Bei der Anfertigung des Zwischenproduktes kann dann eine Schutzschicht abgezogen werden und das Klebeband oder die Klebeschicht kann mit nur noch einseitig aufgebrachter Schutzschicht mit der anderen Seite an der Unterseite der Trägerplatte verklebt werden. Die verbliebene Schutzschicht bleibt dann bis zur Fertigstellung des Flächenwärmetauscherelementes zum Schutz der Klebeschicht an der Klebeschicht haften.

Vorteilhafterweise ist vorgesehen, dass die Schutzschicht eine Ziehfläche oder Greiffläche aufweist. Bei dieser Ziehfläche kann es sich im einfachsten Falle um die Rückseite der Schutzschicht handeln, welche beispielsweise mit einem Fingernagel hintergriffen werden kann. In diesem Sinne kann beispielsweise die Schutzschicht an einer Ecke leicht abgezogen und dann hintergriffen werden. Vorteilhafterweise kann aber auch alternativ vorgesehen sein, dass die Schutzschicht etwas über die Klebeschicht übersteht, um einem Nutzer eine Angriffsfläche bereitzustellen. Alternativ kann die Schutzschicht aber selbstverständlich auch eine separate Lasche vorsehen, insbesondere in einem Eckbereich, welche das Abziehen oder Abnehmen der Schutzschicht erleichtert.

Gemäß einer besonders vorteilhaften Ausgestaltung der Erfindung sieht die Trägerplatte an der die Klebeschicht aufweisenden Seite nach Entfernung der Schutzschicht schwarz aus. Dies ermöglicht optische Vorteile, insbesondere für den Fall, dass die Trägerplatte samt Rohrsystem (also der Rest des Zwischenproduktes nach abgezogener Schutzfolie) unmittelbar an der Haltekassette verklebt werden soll (also ohne ein schwarzes Vlies dazwischen).

Diese Ausgestaltung der Erfindung eignet sich insbesondere für Fälle, in denen die Haltekassette im Bereich ihrer Befestigungsfläche nicht geschlossen sondern gelocht ausgebildet ist und - wie beschrieben - kein Vlies verwendet wird. Der Effekt einer schwarzen Farbe kann hierbei beispielsweise durch eine separate Schicht unterhalb eines transparenten Klebers erreicht werden. Alternativ kann aber selbstverständlich auch ein schwarz gefärbter Kleber oder Ähnliches verwendet werden.

Gemäß einer weiteren vorteilhaften Ausgestaltung der Erfindung weist die Haltekassette sowohl eine Breite als auch eine Länge von jeweils mindestens 50 cm auf. Haltekassetten mit kleineren Dimensionierungen haben sich hierbei als ungeeignet zur Montage erwiesen, insbesondere aus optischen Erwägungen aber auch aus Erwägungen des Montagekomforts und der Stabilität heraus.

Typische Haltekassetten weisen dabei eine Breite und eine Länge von etwa 60 cm auf. Alternative, nicht quadratische und eher länglich ausgerichtete Haltekassetten können beispielsweise Dimensionierungen von 60 X 120 cm aufweisen.

Um in derartig dimensionierte Haltekassetten eingebracht zu werden, weisen die Trägerplatten des Zwischenproduktes typischerweise Dimensionierungen mit Kantenlängen von etwa 30 bis 120 cm auf. Typischerweise muss die Kantenlänge der entsprechenden Trägerplatte zumindest etwas geringer sein als die Kantenlänge der Haltekassette, so dass die Trägerplatte und damit der Rest des Zwischenproduktes nach Abziehen der Schutzschicht problemlos in die Haltekassette einbringbar ist.

Typische Trägerplatten weisen beispielsweise Maße von 30 x 30 cm bis 50 x 50 cm auf. Für größere Segel sind jedoch auch selbstverständlich größere Trägerplatten vorsehbar. Beide Kantenlängen sind jedoch typischerweise mindestens 20 cm oder 30 cm lang, überschreiten 250 cm Länge/Breite aber wohl typischerweise nicht.

Gemäß einer besonders vorteilhaften Ausgestaltung der Erfindung wird das Zwischenprodukt nach Entfernung der Schutzschicht unverformt an der Befestigungsfläche verklebt. In diesem Sinne handelt es sich nach der Entfernung der Schutzschicht eigentlich streng genommen nicht um das Zwischenprodukt, sondern eher um den Rest des Zwischenproduktes. Im Rahmen einer Verständlichkeit soll aber auch in diesem Fall einmalig von einem Zwischenprodukt die Rede sein. Jedenfalls wird der Rest des Zwischenproduktes bzw. die Trägerplatte unverformt an der Befestigungsfläche verklebt, so dass beispielsweise die Trägerplatte hierzu nicht geknickt oder abgewinkelt oder Ähnliches wird. Dieses ist auf Grund der größeren Materialstärke in der Regel auch gar nicht möglich. Da sich die Trägerplatte samt Klebeschicht im Wesentlichen entlang einer Ebene erstreckt, wird die Trägerplatte auch im Wesentlichen entlang einer Ebene an der ebenen Befestigungsfläche verklebt.

Vorzugsweise wird der Rest des Zwischenproduktes im Wesentlichen vollflächig an der Befestigungsfläche verklebt, wobei beispielsweise vorgesehen sein kann, dass die Klebeschicht durchgängig und lückenlos auf der Trägerplatte aufgebracht ist.

Alternativ kann die Klebeschicht aber auch Lochungen oder Ähnliches aufweisen, insbesondere für den Fall, dass entweder in der Befestigungsfläche der Haltekassette und/oder an der Trägerplatte ebenfalls Lochungen vorgesehen sind. Dies gilt jedoch noch als im Wesentlichen vollflächig im Sinne der vorliegenden Erfindung. Hierunter ist insbesondere zu verstehen, dass nicht lediglich eine punktuelle Verklebung erfolgt.

Gemäß der Erfindung kann es vorteilhaft sein, dass die Trägerplatte hierzu nur einseitig eine im Wesentlichen durchgängige Klebeschicht aufweist. Auf der anderen, dem Rohrsystem zugeordneten Seite ist somit keine durchgehende Klebeschicht vorgesehen. Zwar können die Wärmeleitbleche mit Kleber an der anderen Seite befestigt sein, aber dies in der Regel lediglich streifenartig und nicht durchgehend.

Gemäß der Erfindung wird die die Klebeschicht aufweisende Seite des Zwischenproduktes bzw. des Restes des Zwischenproduktes vorzugsweise planparallel mit der Befestigungsfläche verklebt. In diesem Sinne werden zwei Flächen, welche sich im Wesentlichen entlang einer parallelen Ebene erstrecken, nämlich die Befestigungsfläche und die Klebeschicht bzw. die Unterseite der Trägerplatte, möglichst parallel aufeinander zubewegt, so dass die beiden Ebenen aufeinander zu liegen kommen. Ein Nutzer kann dann manuell durch Druckbeaufschlagung nachhelfen, die beiden Flächen zu verkleben.

Vorteilhafterweise weisen sowohl die besagte Seite des Zwischenproduktes bzw. die besagte Seite der Trägerplatte als auch die Befestigungsfläche hierzu keine Rücksprünge auf. Zwar sind geringfügige Lochungen, insbesondere rasterförmige Akustiklochungen, vorsehbar. Rücksprünge in dem Sinne, dass entweder die Befestigungsfläche oder die Trägerplatte Bereiche nach Art von tiefgezogenen, zurückspringenden Bereichen aufweist, würden aber wohl kein sattes Verkleben erlauben.

Gemäß einem weiteren vorteilhaften Verfahrensschritt kann Folgendes vorgesehen werden:
- Verbinden des Flächenwärmetauschers als Teil der Montage mit mindestens einem weiteren, im wesentlichen identisch hergestellten und an derselben Wand oder Decke angeordneten Flächenwärmetauscher.

In diesem Sinne können mehrere Flächenwärmetauscher kaskadenartig zur Ausbildung einer Klimadecke oder Klimawand nebeneinander, möglichst fugenlos angeordnet werden. Das Verfahren stellt somit ein Flächenwärmetauschersystem bereit, welches strömungstechnisch typischerweise derart zusammengeschaltet ist, dass ein der Klimadecke oder -wand zugeleitetes Medium hintereinander sämtliche Flächenwärmetauscher durchfließt.

Gerade bei einer Vielzahl von Flächenwärmetauschern ist es vorteilhaft, am Fertigstellungsort der Zwischenprodukte nicht mit der Logistik bzw. dem Transport der Haltekassetten betraut zu sein.

Jedoch kann das erfindungsgemäße Verfahren grundsätzlich auch mit nur einem Flächenwärmetauscher realisiert werden.

Desweiteren wird die der Erfindung zugrundeliegende Aufgabe auch durch ein Zwischenprodukt gemäß Patentanspruch 10 gelöst sowie durch ein Gebäuderaumklimatisierungssystem gemäß Patentanspruch 11.

Diesbezüglich sei angemerkt, dass sämtliche in Verbindung mit den Verfahrensansprüchen 1 bis 9 beschriebenen Merkmale und Vorteile selbstverständlich auch auf die Patentansprüche 10 und 11 übertragbar sind und lediglich aus Gründen der Übersichtlichkeit an dieser Stelle nicht noch einmal explizit im Zusammenhang mit den Vorrichtungs- bzw. Systemansprüchen wiederholt werden. Gleiches gilt selbstverständlich auch andersherum, also hinsichtlich der mit den Vorrichtungs- und Systemansprüchen beschriebenen Vorteile in Bezug auf die Verfahrensansprüche.

Dementsprechend soll beispielsweise auch ein Zwischenprodukt offenbart sein, welches eine Trägerplatte aufweist, die aus Aluminium besteht und/oder eine Dicke von mindestens 0,3 mm, insbesondere mindestens 0,4 mm oder mindestens 0,5 mm, aufweist und/oder welches nach Entfernung der Schutzschicht mindestens einseitig schwarz aussieht, welches Abmaßungen von mindestens 30 x 30cm, weiter vorteilhafterweise mindestens 40 x 40 cm aufweist, und/oder welches eine folien- oder blattartige ausgebildete Schutzschicht zur Abdeckung der Klebeschicht aufweist.

Gleichfalls soll insbesondere ein Gebäuderaumklimatisierungssystem offenbart sein, bei welchem die Haltekassette eine Breite und eine Länge von jeweils mindestens 50 cm aufweist, insbesondere jeweils von 60 cm oder von etwa 60 cm x etwa 120 cm, und/oder bei welchem das Zwischenprodukt nach Entfernung der Schutzschicht unverformt an der Befestigungsfläche verklebbar ist und/oder bei welchem die die Klebeschicht aufweisende Seite des Zwischenproduktes planparallel mit der Befestigungsfläche verklebbar ist, wobei insbesondere die Befestigungsfläche und die besagte Seite des Zwischenproduktes eben bzw. rücksprungsfrei ausgebildet sind.

Weitere Vorteile und Ausgestaltungen der Erfindung ergeben sich aufgrund der nicht zitierten Unteransprüche sowie aufgrund der nun folgenden Figurenbeschreibung.

In den Figuren zeigen:
- Fig. 1: in einer Abfolge von schematischen Aufsichtsansichten die grundsätzlichen Komponenten bzw. den Herstellungsablauf eines erfindungsgemäßen Zwischenproduktes gemäß der vorliegenden Erfindung, wobei die Fig. 1e dann die Unteransicht des Zwischenproduktes darstellt,
- Fig. 2: in einer sehr schematischen Ansicht, etwa entlang Ansichtspfeil II in Fig. 1, ein Schnitt durch das erfindungsgemäße Zwischenprodukt, unter Fortlassung einiger Rohrabschnitte,
- Fig. 3: in einer Ansicht gemäß Fig. 2, das Zwischenprodukt bei teilabgezogener Schutzschicht,
- Fig. 4: in einer Ansicht gemäß Fig. 3 das Zwischenprodukt bzw. dessen Rest bei abgezogener Schutzschicht und einem Einbringen in eine Haltekassette,
- Fig. 5: in einer Ansicht gemäß Fig. 4 ein fertiggestellter Flächenwärmetauscher gemäß dem erfindungsgemäßen Verfahren,
- Fig. 6: in einer sehr schematischen, seitlichen Schnittansicht ein Schnitt durch einen Gebäuderaum, in welchem der fertiggestellte Flächenwärmetauscher gemäß Fig. 5 mittig montiert ist, unter Fortlassung des Zwischenprodukt(rest)es aus Gründen der Übersichtlichkeit, und
- Fig. 7: in einer sehr schematischen Aufsicht ein alternativer fertiggestellter Flächenwärmetauscher mit zwei in eine Haltekassette eingebrachten, bereits verklebten Zwischenprodukt(rest)en, welche eine alternative Ausgestaltung zu dem in Fig. 1 dargestellten Zwischenprodukt mit überstehenden Rohren aufweisen.

Der nachfolgenden Figurenbeschreibung sei vorangestellt, dass gleiche oder vergleichbare Teile gegebenenfalls mit identischen Bezugszeichen versehen sind, teilweise unter Hinzufügung kleiner Buchstaben oder von Apostrophs. In den der Figurenbeschreibung nachfolgenden Patentansprüchen werden die in den Figuren und der Figurenbeschreibung verwendeten Bezugszeichen daher der Einfachheit halber grundsätzlich ohne Apostrophs oder kleine Buchstaben verwendet, sofern die entsprechenden Gegenstände vergleichbar sind.

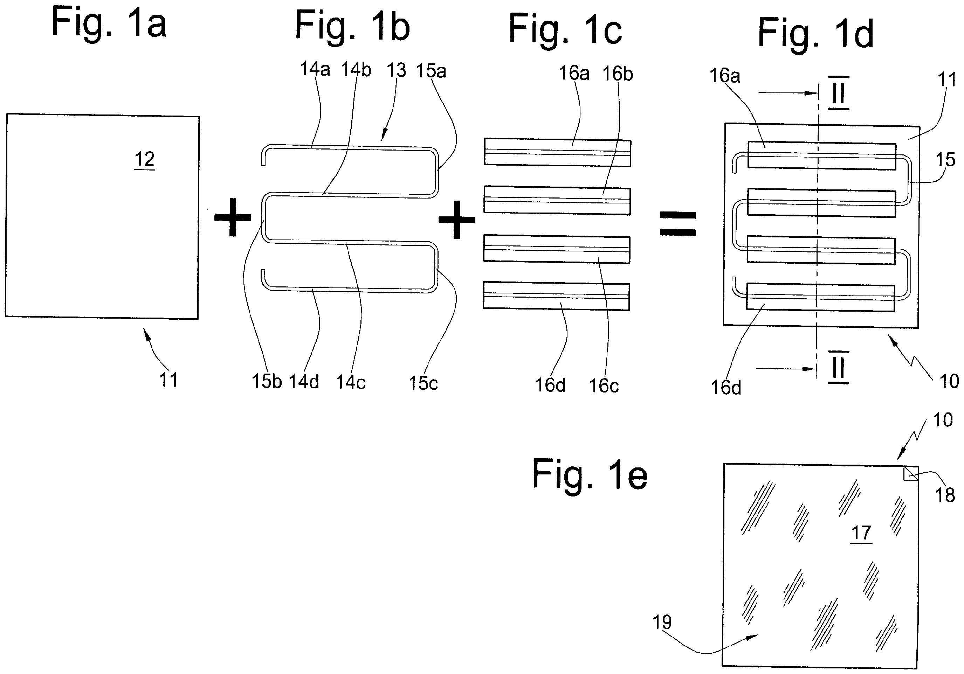

Zunächst zeigt die Figurenabfolge der Figur 1 die herstellerseitige Fertigung eines erfindungsgemäßen Zwischenproduktes 10 (vgl. Fig. 1d und 1e).

Zu dessen Herstellung, beispielsweise in den Fabrikationseinrichtungen des Herstellers, wird ausweislich Fig. 1a zunächst eine Trägerplatte 11 verwendet. Die Trägerplatte 11 ist in Fig. 1a mit ihrer Vorderseite 12 dargestellt und besteht im Wesentlichen aus einem Metallblech, beispielsweise aus Aluminium. Die Trägerplatte 11 weist dabei eine Materialstärke von mindestens 0,3 mm auf, in dem vorliegenden Ausführungsbeispiel etwa von 0,5 mm oder auch 0,6 mm. Diese Materialstärke sorgt insbesondere dafür, dass die Trägerplatte 11 auch als Transferblech bezeichenbar ist, da die vorgesehene Materialstärke eine optimale Wärmeleitung in der Trägerplatte ermöglicht.

Auf der Vorderseite 12 der Trägerplatte 11 wird ausweislich Fig. 1b ein Rohrsystem 13 nach Art eines Rohrmäanders vorgesehen. Das dargestellte Rohrsystem 13 weist hierbei insbesondere vier gerade Rohrabschnitte 14a, 14b, 14c, 14d auf, welche typischerweise einen D-förmigen Querschnitt zeigen. Die drei dazwischen angeordneten, im Wesentlichen bogenförmigen Abschnitte 15a, 15b, 15c können hingegen beispielsweise einen runden Querschnitt beibehalten. Dieses Rohrsystem 13 wird mit Hilfe von in Fig. 1c dargestellten, sogenannten Wärmeleitblechen 16a, 16b, 16c, 16d ausweislich Fig. 1d an der Trägerplatte 11 festgelegt. Die Wärmeleitbleche 16a, 16b, 16c, 16d sind hierbei insbesondere streifenförmig ausgebildet und können jeweils einen geraden Rohrabschnitt 14a, 14b, 14c, 14d übergreifen und an der Trägerplatte 11 festlegen.

In diesem Sinne sind in dem vorliegenden Ausführungsbeispiel die bogenförmigen Rohrabschnitte 15 insbesondere nicht unmittelbar an der Trägerplatte 11 festgelegt, sondern lediglich mittelbar über die geraden Abschnitte 14 und die Wärmeleitbleche 16. Die Wärmeleitbleche 16 können beispielsweise (insbesondere beidseitig) an der Trägerplatte 11 verklebt sein oder an der Trägerplatte auf sonstige Weise, beispielsweise mechanisch, wie in der nachveröffentlichten DE 10 2015 003 280 der Anmelderin dargelegt, deren Offenbarungsinhalt hiermit vollumfänglich in den Inhalt der vorliegenden Patentanmeldung eingeschlossen wird. Demnach kann es sich bei den Wärmeleitblechen insbesondere um Metallstreifen mit guten Wärmeleiteigenschaften handeln.

Das auf diese Weise fertig gestellte Zwischenprodukt ist in Fig. 1d in einer Vorderansicht zu sehen und in Fig. 1e in einer Hinteransicht.

Die Hinteransicht gemäß Fig. 1e zeigt dabei, dass die Hinterseite 19 des Zwischenproduktes 10 und somit auch die Hinterseite der Trägerplatte 11 mit einer Schutzschicht 17, beispielsweise einer abziehbaren Folie oder einem abziehbaren, mit Silikon beschichteten Papier oder ähnlichem, versehen ist. Die Schutzschicht 17 dient dabei der Abdeckung und dem Schutz einer auf der Rückseite von Zwischenprodukt 10 bzw. Trägerplatte 11 angeordneten, in den Figur 1 nicht dargestellten Klebeschicht. Mit dieser Klebeschicht soll das Zwischenprodukt 10 auf später noch beschriebene Weise an einer Haltekassette verklebbar sein.

Typischerweise weist die Schutzschicht 17 zur Gewährleistung einer leichten Entfernbarkeit bzw. eines leichten Abziehens eine Greiffläche 18 auf, welche beispielsweise von einem überstehenden Folienbereich oder einfach einem Bereich der Unterseite der Folie (welcher der Klebeschicht zugeordnet ist) bereitgestellt werden kann.

Das fertige Zwischenprodukt gemäß Fig. 1d/e wird typischerweise bei einem Flächenwärmetauscherhersteller gesondert hergestellt. Es soll jedoch in eine Haltekassette eingebracht werden, welche sich erfindungsgemäß nun gerade nicht am Ort des Herstellers befindet.

Das in Fig. 1 mit 10 bezeichnete Zwischenprodukt stellt in diesem Sinne eine leicht handhabbare und transportable sowie gut aufbewahrbare Einheit dar, welche auf logistisch leichte Weise (da beispielsweise ein Versand ohne die besonders schwere Haltekassette möglich ist) verbracht oder transportiert werden kann.

Typischerweise wird das in Fig. 1 mit 10 bezeichnete, handhabbare Zwischenprodukt zur Montage eines Flächenwärmetauschers dann an einen anderen/entfernten Ort verbracht, an welchem die Fertigstellung des Flächenwärmetauschers (durch ein Zusammenbringen des Zwischenproduktes mit einer Haltekassette) erfolgt, wie insbesondere die Figurenabfolge 2 bis 5 zeigt.

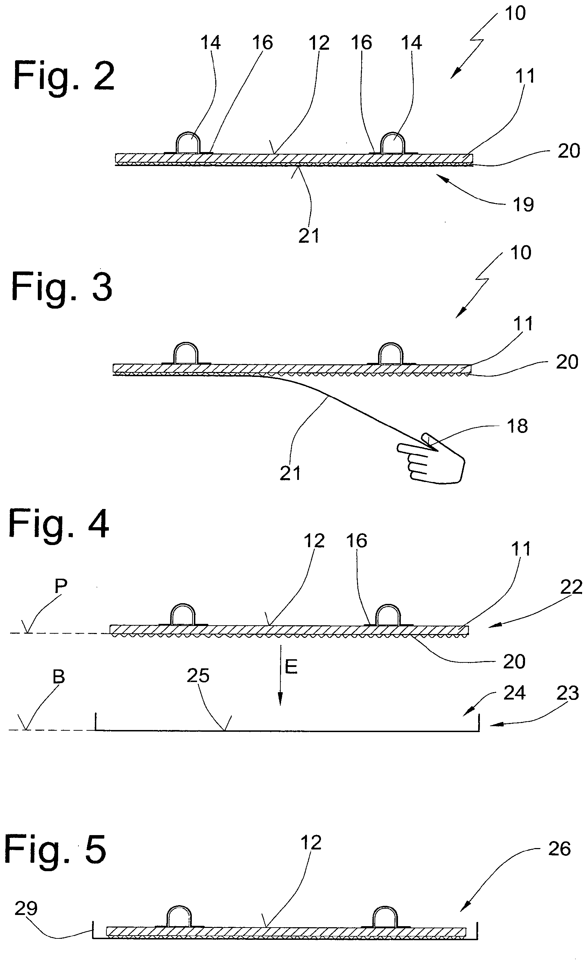

Hierbei zeigt Fig. 2 einen Schnitt durch das Zwischenprodukt 10 in einer Schnittansicht etwa gemäß den Ansichtspfeilen II in Fig. 1d, jedoch unter Fortlassung zweier gerader Rohrabschnitte. Demnach sind in Fig. 2 der Übersichtlichkeit halber exemplarisch lediglich zwei der eigentlich vier vorhandenen geraden Rohrabschnitte 14 des Rohrsystems 13 dargestellt. Die Rohrabschnitte 14 sind ausweislich Fig. 2 im Querschnitt D-förmig und sind durch die Wärmeleitbleche 16, in dem vorliegenden Ausführungsbeispiel beidseitig, an der Vorderseite 12 der Trägerplatte 11 befestigt.

Fig. 2 verdeutlicht desweiteren, dass auf der Rückseite oder Unterseite 19 der Trägerplatte 11 eine Klebeschicht 20 angeordnet ist, welche von einer Schutzschicht 21, insbesondere vollflächig, abgedeckt wird. Die Schutzschicht 21 dient insbesondere einer einfacheren Handhabung des Zwischenproduktes 10 und des einfacheren Transportes, in dem Sinne, dass das Zwischenprodukt 10 nicht während eines Transportes mit einem anderen Gegenstand aufgrund der Klebeschicht 20 verklebt.

Das in Fig. 2 dargestellte Zwischenprodukt 10 befindet sich nun bereits an einem zweiten Ort, wobei es sich beispielsweise um den Montageort handeln kann, also beispielsweise den Gebäuderaum, in welchem der Flächenwärmetauscher angebracht werden soll. Es kann sich aber grundsätzlich um den Montageort lediglich in dem Sinne handeln, dass der Zusammenbau des Flächenwärmetauschers in einem Nachbarraum, Nachbargebäude oder vor dem Zielgebäude oder in einem benachbarten räumlichen Abschnitt zu dem Zielraum erfolgt. Alternativ kann der zweite Ort von dem Montageort auch (geringfügig) abweichen. Beispielsweise kann das fertige Zwischenprodukt 10 gemäß Fig. 2 von der Lokalität des Herstellers zunächst zu einer Lokalität eines Monteurs transportiert werden, welcher in der Nähe des Montageortes ansässig ist.

Jedenfalls kann ausweislich Fig. 3 an einem zweiten Ort, welcher vorteilhafterweise der Montageort ist, die Schutzschicht 21 oder Schutzfolie 21 leicht manuell entfernt bzw. abgezogen werden. Auf diese Weise wird die Klebeschicht 20 des Zwischenproduktes 10 freigelegt. Ein Nutzer kann hierzu händisch eine Greiffläche 18 der Schutzschicht 21 hintergreifen.

Nach dem Entfernen der Schutzschicht 21 kann sich beim Anblick der Unterseite der Trägerplatte 11 dann ein schwarzer Farbeindruck ergeben. Dieser kann beispielsweise durch eine schwarz gefärbte Klebeschicht 20 erzeugt werden, oder in einem alternativen, nicht dargestellten Ausführungsbeispiel durch eine separate Beschichtung der Unterseite der Trägerplatte 11, welche somit zwischen der Trägerplatte 11 und der Klebeschicht 20 angeordnet wäre, wobei in diesem Fall eine im Wesentlichen transparente Klebeschicht zu verwenden ist.

Das Entfernen der Schutzschicht 21 gemäß Fig. 3 erfolgt vorzugsweise unmittelbar vor einem Verkleben des Restes 22 des Zwischenproduktes in oder an einer Haltekassette 23, wie dies in Fig. 4 dargestellt ist. Der Rest 22 des Zwischenproduktes 10, insbesondere umfassend die freigelegte Klebeschicht 20, die Trägerplatte 11 sowie das Rohrsystem 13 und die Wärmeleitbleche 16, kann dann entlang einer Einbringrichtung E an die Innenseite 24 der Haltekassette angenähert und dort mit Hilfe der freigelegten Klebeschicht 20, insbesondere vollflächig, verklebt werden. Dieses Verkleben erfolgt dabei im Wesentlichen planparallel, indem die Plattenebene P planparallel an die Befestigungsebene B der Haltekassette 23 herangebracht wird, bis sie an einer Befestigungsfläche 25 der Haltekassette 23 verklebt. Hierzu sind in der Regel keine Werkzeuge, Hilfsmittel oder Ähnliches notwendig. Ein Nutzer kann dies händisch erledigen, insbesondere indem er nach dem Auflegen des Restes 22 des Zwischenproduktes 10 in oder auf die Haltekassette 23 bzw. die Befestigungsfläche 25 Druck etwa entlang der Einbringrichtung E auf die Rückseite 24 der Trägerplatte ausübt.

Der fertiggestellte Flächenwärmetauscher ist dann in Fig. 5 mit der Bezugsziffer 26 gekennzeichnet.

In den Figuren 4 und 5 nicht dargestellt ist ein weiteres Ausführungsbeispiel, welches vorsieht, dass die Befestigungsfläche 25 der Haltekassette 23 von einem in der Haltekassette angeordneten, vorzugsweise schwarzen, Vlies bereitgestellt wird. Dieses optionale Vlies weist u.a. akustische und optische Eigenschaften auf und kann in einem gesonderten Verfahrensschritt bereits vorher in die Kassette 23 eingebracht sein.

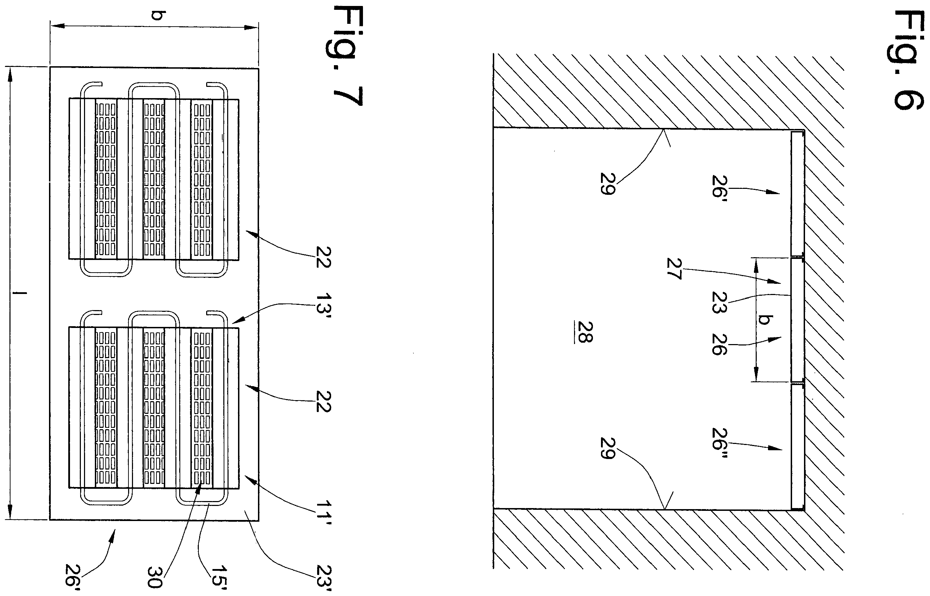

Sofern die Fertigstellung des Flächenwärmetauschers 26 gemäß der Figuren 2 bis 5 entfernt des Montageortes erfolgt, kann der Flächenwärmetauscher 26 nunmehr vom zweiten Ort, beispielsweise dem Ort des lokalen Monteurs, zum Montageort, insbesondere dem vorgesehenen Gebäuderaum, verbracht werden. Erfolgte die Fertigstellung des Flächenwärmetauschers 26 hingegen bereits am Montageort, so kann nunmehr (ausweislich Fig. 6) die abschließende Montage des fertiggestellten Flächenwärmetauschers 26 erfolgen.

Fig. 6 zeigt hierbei den Flächenwärmetauscher 26 in einem vollständig montierten Zustand, wozu der Flächenwärmetauscher 26 an einer Decke 27 eines Gebäuderaumes 28 angebracht bzw. befestigt wurde. Aus Gründen der Übersichtlichkeit ist von dem Flächenwärmetauscher 26 in Fig. 6 aber lediglich die Haltekassette ohne den Rest 22 des Zwischenproduktes 10 dargestellt. Selbstverständlich beinhaltet der fertigmontierte Flächenwärmetauscher 26 aber sämtliche in Fig. 5 dargestellte Komponenten.

Zur Montage des Flächenwärmetauschers 26 kann die Haltekassette 23 beispielsweise in Fig. 6 angedeutete, und in Fig. 5 der Übersichtlichkeit halber fortgelassene, Montageflächen aufweisen, welche sich insbesondere an die Seitenränder 29 der Haltekassette 23 (vgl. Fig. 5) anschließen können.

Der Flächenwärmetauscher 26 ist in Fig. 6 gemeinsam mit anderen Flächenwärmetauschern 26' und 26" kaskadenartig an der Decke 27 montiert. Zur vollständigen Montage gehört es u.a. auch, dass der Flächenwärmetauscher 26 bezüglich seines Rohrsystems mit den anderen Flächenwärmetauschern 26' und/oder 26" verbunden wird, damit eine fortlaufende Leitung eines das Rohrsystem 13 durchfließenden Fluides an der Decke 27 gesichert ist.

Bezüglich Fig. 6 sei angemerkt, dass an der Decke selbstverständlich sehr viel mehr oder auch weniger als drei der dargestellten Flächenwärmetauscher eingesetzt werden können. Insbesondere können die Flächenwärmetauscher nicht nur, wie in der Schnittdarstellung gemäß Fig. 6 dargestellt, nebeneinander sondern auch bezüglich der anderen Raumrichtung hintereinander angeordnet sein.

Sämtlichen Anordnungsformen ist dabei gemein, dass die Flächenwärmetauscher 26 dabei eine sogenannte Klimadecke ausbilden, welche für eine Klimatisierung des Raumes 28 sorgt. Werden die Rohrsysteme bzw. das Rohrsystem dabei mit einem Kühlmedium, beispielsweise gekühltem oder kühlem Wasser, durchflossen, kann die Klimadecke einen kühlenden Effekt aufweisen. Soll der Raum 28 hingegen gewärmt werden, können die Rohrsysteme 13 der Flächenwärmetauscher 26 mit erhitztem Medium, beispielsweise heissem Wasser, durchflossen werden.

Lediglich der Vollständigkeit halber sei bezüglich Fig. 6 angemerkt, dass die Flächenwärmetauscher 26 je nach Anwendungsfall selbstverständlich auch an den Wänden 29 anordenbar sein könnten.

Ein typischer Flächenwärmetauscher 26 weist dabei eine Breite b von etwa 60 cm, insbesondere von zwischen 50 und 70 cm auf. In die andere Raumrichtung kann der Flächenwärmetauscher 26 dabei eine identische Bemaßung aufweisen oder alternativ typischerweise auch eine etwa doppelt so lange Bemaßung, also eine Länge I von etwa 120 cm oder von insbesondere zwischen 100 cm und 140 cm. Typischerweise ist dabei innerhalb einer Haltekassette genau ein Zwischenprodukt(rest) 22 angeordnet bzw. ein Zwischenprodukt verbaut.

Fig. 7 zeigt ein anderes Ausführungsbeispiel eines verbauten Flächenwärmetauschers, bei welchem die Länge der Haltekassette 23' etwa doppelt so lang ist wie die Breite, also etwa bei einer Länge I von 1,20 m und bei einer Breite b von etwa 60 cm. Bei diesem Ausführungsbeispiel sind dann zwei im Wesentlichen identische Reste 22' von Zwischenprodukten 10' nebeneinander befestigt. In Fig. 7 nicht dargestellt, sind die beiden Baueinheiten 22' bezüglich ihrer Rohrsysteme 13' aber tatsächlich miteinander verbunden.

Eine weitere alternative Ausführung zeigt Fig. 7 auch dahingehend, dass die Einheiten oder Reste 22 jeweils eine andersartige Ausgestaltung der Trägerplatte 11' im Vergleich zur Trägerplatte 11 gemäß Fig. 1d aufweisen: So stehen nämlich insbesondere die gebogenen Bereiche 15' des Rohrsystems 13' über die eigentliche Trägerplatte 11' seitlich über. Diese Ausgestaltung kann je nach Kundenwünschen variieren.

Zudem ist eine weitere Alternative vorgesehen, nach welcher die Trägerplatten 11' in Fig. 7 eine sogenannte Akustiklochung 30 aufweisen. Diese Akustiklochung kann einer verbesserten Akustik dienen und hierbei insbesondere mit der entsprechenden, in Fig. 7 nicht erkennbaren, Akustiklochung in der Befestigungsfläche 25 der Haltekassette 23' einhergehen. Die Akustiklochungen in der Haltekassette 23' und in den Trägerplatten 11' können somit im Wesentlichen kongruent bei der Montage übereinander gebracht werden. Hierbei ist zu beachten, dass die in Fig. 7 nicht dargestellte Klebeschicht an der Trägerplatte 11' zur Montage auf der Befestigungsfläche der Haltekassette 23' die Akustiklochungen gegebenenfalls freilässt. In diesem Sinne kann auch die Klebeschicht eine kongruente Lochung oder kongruente Öffnungen oder Auslassungen aufweisen.

So muss die Klebeschicht in diesem Falle im Sinne der vorliegenden Patentanmeldung trotzdem noch als im Wesentlichen durchgehende Klebeschicht angesehen werden, welche im Wesentlichen vollflächig an der Innenseite der Haltekassette 23' verklebt wird.

Akustiklochungen können selbstverständlich auch bei Varianten vorgesehen werden, bei welchen lediglich ein Rest eines Zwischenproduktes bzw. ein Zwischenprodukt zur Herstellung eines Flächenwärmetauschers verwendet wird.

## Patentansprüche

1. Verfahren zur Einrichtung einer Gebäuderaumklimatisierung, umfassend die Schritte:
• Bereitstellen einer Haltekassette (23) zur Decken-oder Wandmontage mit einer sich im wesentlichen in einer Ebene (B) erstreckenden Befestigungsfläche (25) an einem ersten Ort, insbesondere dem Montageort,
• Fertigstellen eines Zwischenproduktes (10), umfassend genau eine mindestens 0,3 mm dicke Metall-Trägerplatte (11) an dessen einer Seite (12) ein Rohrsystem (13) zum Leiten eines Mediums von mindestens einem Wärmeleitblech (16) festgelegt ist und an dessen anderer Seite (19) eine Klebeschicht (20) sowie eine die Klebeschicht (20) abdeckende Schutzschicht (21) angeordnet sind, an einem zweiten, entfernten Ort,
• Verbringen des Zwischenproduktes (10) von dem zweiten an den ersten Ort,
• manuelles Entfernen, insbesondere Abziehen, der Schutzschicht (21) zur Freilegung der Klebeschicht (20),
• manuelles Verkleben des Zwischenproduktes an der Befestigungsfläche der Haltekassette (23) mit Hilfe der freigelegten Klebeschicht (20) zur Fertigstellung eines Flächenwärmetauschers (26),
• Montage des fertiggestellten Flächenwärmetauschers (26) an der Gebäuderaumdecke oder -wand (27, 29), insbesondere als Teil einer Vielzahl von kaskadenartig angeordneten und leitungstechnisch verbundenen Flächenwärmetauschern (26, 26', 26") an besagter Gebäuderaumdecke oder -wand (27,29).

2. Verfahren nach Anspruch 1, **dadurch gekennzeichnet, dass** die Trägerplatte (11) aus Aluminium besteht und/oder eine Dicke von mindestens 0,3 mm, insbesondere mindestens 0,4 mm oder mindestens 0,5 mm, aufweist.

3. Verfahren nach Anspruch 1 oder 2, **dadurch gekennzeichnet, dass** die äußere Schutzschicht (21) folien-oder blattartig ausgebildet und manuell, werkzeuglos abziehbar ist, und insbesondere eine mit einem Finger(-nagel) (hinter-)greifbare Ziehfläche (18) aufweist.

4. Verfahren nach einem der voranstehenden Ansprüche, **dadurch gekennzeichnet, dass** die Trägerplatte (11) an ihrer die Klebeschicht (20) aufweisenden Seite (19) nach Entfernung der Schutzschicht (21) schwarz aussieht, insbesondere aufgrund einer zwischen Trägerplatte (11) und Klebeschicht (20) angeordneten Beschichtung.

5. Verfahren nach einem der voranstehenden Ansprüche, **dadurch gekennzeichnet, dass** die Haltekassette (23) eine Breite und eine Länge von jeweils mindestens 50 cm aufweist, insbesondere von jeweils etwa 60 cm oder von etwa 60 cm mal etwa 120 cm.

6. Verfahren nach einem der voranstehenden Ansprüche, **dadurch gekennzeichnet, dass** das Zwischenprodukt (10) nach Entfernung der Schutzschicht (21) unverformt an der Befestigungsfläche (25) verklebt wird.

7. Verfahren nach einem der voranstehenden Ansprüche, **dadurch gekennzeichnet, dass** das Zwischenprodukt (10) im Wesentlichen vollflächig an der Befestigungsfläche (25) verklebt wird, wobei die Trägerplatte (11) insbesondere, nur einseitig, eine im Wesentlichen durchgehende Klebeschicht (20) aufweist.

8. Verfahren nach einem der voranstehenden Ansprüche, **dadurch gekennzeichnet, dass** die die Klebeschicht (20) aufweisende Seite des Zwischenproduktes (10) planparallel mit der Befestigungsfläche (25) verklebt wird und/oder dass sowohl besagte Seite des Zwischenproduktes (10) als auch die Befestigungsfläche (25) jeweils eben bzw. rücksprungsfrei ausgebildet sind.

9. Verfahren nach einem der voranstehenden Ansprüche, **gekennzeichnet durch** den Verfahrensschritt:
• Verbinden des Flächenwärmetauschers (26) als Teil der Montage mit mindestens einem weiteren, im wesentlichen identisch hergestellten und an derselben Wand oder Decke angeordneten Flächenwärmetauscher (26', 26").

10. Zwischenprodukt (10) für die Herstellung eines Flächenwärmetauschers (26) zur Gebäuderaumklimatisierung, wobei das Zwischenprodukt (10) genau eine mindestens 0,3mm dicke Metall-Trägerplatte (11) umfasst, an dessen einer Seite (12) ein Rohrsystem (13), zum Leiten eines Mediums, von mindestens einem Wärmeleitblech (16) festgelegt ist und an dessen anderer Seite (19) eine Klebeschicht (20) sowie eine die Klebeschicht (20) abdeckende, manuell entfernbare äußere Schutzschicht (21) angeordnet sind.

11. Gebäuderaumklimatisierungssystem, umfassend ein Zwischenprodukt (10) nach Anspruch 10 sowie eine Haltekassette (23) zur Decken-oder Wandmontage mit einer sich im wesentlichen in einer Ebene (B) erstreckenden Befestigungsfläche (25) zur manuellen Befestigung des Zwischenproduktes (10,22) bei entfernter Schutzschicht (21), wobei die Befestigungsfläche (25) insbesondere mindestens die Flächengröße der Trägerplatte (11) aufweist.

## Claims

1. Method for installing a building room air conditioning system, comprising the steps:
∘ supplying to a first site, in particular the installation site, a retaining cassette (23) for mounting on a ceiling or wall having an attachment face (25) extending substantially in a plane (B),
∘ assembling, at a second, remote site, an intermediate product (10), comprising precisely one at least 0.3 mm thick metal support plate (11), to one side (12) of which a tube system (13) is attached for directing a medium from at least one heat-conducting plate (16), and on the other side (19) of which an adhesive layer (20) and a protective layer (21) covering the adhesive layer (20) are disposed,
∘ transporting the intermediate product (10) from the second to the first site,
∘ manually removing, in particular peeling off, the protective layer (21) to expose the adhesive layer (20),
∘ manually adhering the intermediate product to the attachment face of the retaining cassette (23) with the aid of the exposed adhesive layer (20) to assemble a surface heat exchanger (26),
∘ mounting the assembled surface heat exchanger (26) on the building room ceiling or wall (27, 29), in particular as part of a plurality of surface heat exchangers (26, 26', 26") disposed in a cascaded arrangement and connected in a conducting arrangement on said building room ceiling or wall (27, 29).

2. Method as claimed in claim 1, **characterised in that** the support plate (11) is made from aluminium and/or has a thickness of at least 0.3 mm, in particular at least 0.4 mm or at least 0.5 mm.

3. Method as claimed in claim 1 or 2, **characterised in that** the outer protective layer (21) is provided in the form of a film or sheet and can be peeled off manually without tools, and in particular has a peel-off face (18) which can be gripped (from behind) by means of a finger (nail).

4. Method as claimed in one of the preceding claims, **characterised in that** after removal of the protective layer (21), the support plate (11) is black in appearance on its side (19) having the adhesive layer (20), in particular due to a coating disposed between the support plate (11) and adhesive layer (20).

5. Method as claimed in one of the preceding claims, **characterised in that** the retaining cassette (23) has a width and a length of respectively at least 50 cm, in particular of respectively approximately 60 cm or of approximately 60 cm by approximately 120 cm.

6. Method as claimed in one of the preceding claims, **characterised in that** after removal of the protective layer (21), the intermediate product (10) is adhered to the attachment face (25) undeformed.

7. Method as claimed in one of the preceding claims, **characterised in that** the intermediate product (10) is adhered to the attachment face (25) by substantially the entire surface, the support plate (11) in particular having a substantially continuous adhesive layer (20) on one side only.

8. Method as claimed in one of the preceding claims, **characterised in that** the side of the intermediate product (10) having the adhesive layer (20) is adhered plane parallel with the attachment face (25) and/or both said side of the intermediate product (10) and the attachment face (25) are each flat respectively free of recesses.

9. Method as claimed in one of the preceding claims, **characterised by** the method step:
o connecting the surface heat exchanger (26) as part of the installation to at least one other surface heat exchanger (26', 26") produced in a substantially identical manner and disposed on the same wall or ceiling.

10. Intermediate product (10) for producing a surface heat exchanger (26) for a building room air conditioning system, the intermediate product (10) comprising precisely one at least 0.3 mm thick metal support plate (11), to one side (12) of which a tube system (13) is attached for directing a medium from at least one heat-conducting plate (16), and on the other side (19) of which an adhesive layer (20) and an outer, manually removable, protective layer (21) covering the adhesive layer (20) are disposed.

11. Building room air conditioning system, comprising an intermediate product (10) as claimed in claim 10 and a retaining cassette (23) for mounting on a ceiling or wall, having an attachment face (25) extending substantially in a plane (B) for manually attaching the intermediate product (10, 22) when the protective layer (21) is removed, the attachment face (25) in particular having a surface area at least the size of the support plate (11).

## Revendications

1. Procédé destiné à créer une climatisation de bâtiment, comprenant les étapes suivantes:
- préparer une cassette de maintien (23) destinée être montée au plafond ou sur un mur et présentant une face de fixation (25) qui s'étend essentiellement dans un plan (B) en un premier endroit, en particulier l'endroit de montage,
- créer un produit intermédiaire (10) qui comprend exactement une plaque de support métallique (11) d'une épaisseur d'au moins 0,3 mm et sur un premier côté (12) de laquelle un réseau de tubes (13) est fixé pour conduire un fluide à l'aide d'au moins un déflecteur de chaleur (16), et sur l'autre côté (19) de laquelle sont disposées une couche de colle (20) ainsi qu'une couche de protection (21) qui recouvre la couche de colle (20), en un deuxième endroit éloigné,
- transférer le produit intermédiaire (10) du deuxième endroit au premier endroit,
- enlever manuellement, en particulier détacher, la couche de protection (21) dans le but de libérer la couche de colle (20),
- coller manuellement le produit intermédiaire sur la face de fixation de la cassette de maintien (23) à l'aide de la couche de colle libérée (20) afin de créer un échangeur de chaleur plat (26), et
- monter l'échangeur de chaleur plat créé (26) sur le plafond ou sur le mur du bâtiment (27, 29) en particulier sous la forme d'une multiplicité d'échangeurs de chaleur plats (26, 26', 26") disposés en cascade et techniquement reliés en conduite sur ledit plafond ou ledit mur (27, 29) du bâtiment.

2. Procédé selon la revendication 1, **caractérisé en ce que** la plaque de support (11) est composée d'aluminium et/ou présente une épaisseur d'au moins 0,3 mm, en particulier d'au moins 0,4 mm, ou d'au moins 0,5 mm.

3. Procédé selon la revendication 1 ou 2, **caractérisé en ce que** la couche de protection extérieure (21) est réalisée sous la forme d'un film ou d'une feuille et peut être détachée manuellement sans outil et présente en particulier un onglet (18) qui peut être saisi (par l'arrière) à l'aide (d'un ongle de) d'un doigt.

4. Procédé selon l'une quelconque des revendications précédentes, **caractérisé en ce que** la plaque de support (11) présente sur son côté (19) qui comporte la couche de colle (20), après l'enlèvement de la couche de protection (21), un aspect noir, en particulier à cause d'un revêtement qui est disposé entre la plaque de support (11) et la couche de colle (20).

5. Procédé selon l'une quelconque des revendications précédentes, **caractérisé en ce que** la cassette de maintien (23) présente une largeur et une longueur respectivement d'au moins 50 cm, en particulier respectivement d'environ 60 cm ou d'environ 60 cm sur environ 120 cm.

6. Procédé selon l'une quelconque des revendications précédentes, **caractérisé en ce que** l'on colle le produit intermédiaire (10) après l'enlèvement de la couche de protection (21) sans déformation sur la face de fixation (25) .

7. Procédé selon l'une quelconque des revendications précédentes, **caractérisé en ce que** l'on colle le produit intermédiaire (10) essentiellement en pleine surface sur la face de fixation (25), dans lequel la plaque de support (11) présente en particulier, sur un seul coté, une couche de colle essentiellement continue (20).

8. Procédé selon l'une quelconque des revendications précédentes, **caractérisé en ce que** le côté du produit intermédiaire (10) qui comporte la couche de colle (20) est collé en plan parallèle avec la face de fixation (25) et/ou **en ce qu'**aussi bien ledit côté du produit intermédiaire (10) que la face de fixation (25) sont réalisés respectivement sous une forme plane ou sans retrait.

9. Procédé selon l'une quelconque des revendications précédentes, **caractérisé par** l'étape de procédé qui consiste à assembler l'échangeur de chaleur plat (26) comme partie du montage avec au moins un autre échangeur de chaleur plat (26', 26") qui est fabriqué de manière essentiellement identique et qui est disposé sur le même mur ou sur le même plafond.

10. Produit intermédiaire (10) destiné à former un échangeur de chaleur plat (26) destiné à créer une climatisation de bâtiment, dans lequel le produit intermédiaire (10) comprend exactement une plaque de support métallique (11) d'une épaisseur d'au moins 0,3 mm, sur un premier côté (12) de laquelle un réseau de tubes (13) est fixé dans le but de à conduire un fluide, à l'aide d'au moins un déflecteur de chaleur (16), et sur l'autre côté (19) de laquelle sont disposées une couche de colle (20) ainsi qu'une couche de protection extérieure (21) séparable manuellement qui recouvre la couche de colle (20).

11. Système destiné à créer une climatisation de bâtiment, comprenant un produit intermédiaire (10) selon la revendication 10 ainsi qu'une cassette de maintien (23) destinée au montage sur un plafond ou sur un mur et présentant une face de fixation (25) qui s'étend essentiellement dans un plan (B) en vue de la fixation manuelle du produit intermédiaire (10, 22) lorsque la couche de protection (21) est enlevée, dans lequel la face de fixation (25) présente en particulier au moins la grandeur de la face de la plaque de support (11).
